# EUROPÄISCHE PATENTSCHRIFT

(11) **EP 2 722 252 B1**
(45) Veröffentlichungstag und Bekanntmachung des Hinweises auf die Patenterteilung: **18.11.2015**
(21) Anmeldenummer: 13187488.5
(22) Anmeldetag: 07.10.2013
(51) Int. Cl.: B62D 1/06, H05B 3/50

(54) **Heizvorrichtung für ein Lenkrad eines Kraftfahrzeugs, Kraftfahrzeug und entsprechendes Verfahren**
Heating device for a steering wheel of a motor vehicle, motor vehicle and corresponding method
Dispositif de chauffage pour le volant d'un véhicule automobile, véhicule automobile et procédé correspondant

(30) Priorität: 17.10.2012 DE 102012020286
(43) Veröffentlichungstag der Anmeldung: 23.04.2014
(73) Patentinhaber: Valeo Schalter und Sensoren GmbH, 74321 Bietigheim-Bissingen (DE)
(72) Erfinder: Poslowsky, Georg, 74348 Lauffen a.N. (DE); Raber, Ingo, 74321 Bietigheim-Bissingen (DE)

(56) Entgegenhaltungen:
- DE-A1-102008 049 277
- DE-U1- 29 802 579
- US-B1- 6 495 799
- "HEATED STEERING WHEEL COLUMN ALTERNATIVE PACKAGE REQUIREMENTS", RESEARCH DISCLOSURE, MASON PUBLICATIONS, HAMPSHIRE, GB, Nr. 439, 1. November 2000 (2000-11-01), Seite 1955, XP001009336, ISSN: 0374-4353

## Beschreibung

Die Erfindung betrifft eine Heizvorrichtung zum Beheizen eines Lenkrads eines Kraftfahrzeugs, mit einem elektrischen Schaltungseingang zum Anschließen der Vorrichtung an eine elektrische Spannungsquelle des Kraftfahrzeugs, mit einem elektrischen Schaltungsausgang zum Anschließen eines Heizelements zum Beheizen des Lenkrads, mit einem zwischen den Schaltungseingang und den Schaltungsausgang geschalteten Gleichspannungswandler, der aus einer Bordnetzspannung der Spannungsquelle eine Ausgangsspannung mit einem gegenüber dem Spannungswert der Bordnetzspannung verschiedenen Spannungswert am Schaltungsausgang bereitstellt, und mit einer elektronischen Steuereinheit zum Einstellen einer Temperatur des Lenkrads auf einen vorgebbaren Sollwert. Die Erfindung betrifft außerdem ein Kraftfahrzeug mit einer solchen Heizvorrichtung.

Heizvorrichtungen zum Beheizen eines Lenkrads sind bereits aus dem Stand der Technik bekannt, beispielsweise aus dem Dokument EP 1 054 800 B1. Die bekannte Heizvorrichtung umfasst einen elektrischen Schaltungseingang, welcher an ein Bordnetz des Kraftfahrzeugs angeschlossen und hierbei mit der Fahrzeugbatterie gekoppelt wird. Die Fahrzeugbatterie stellt eine Bordnetzspannung mit einem Spannungswert von 12 Volt bereit. Mit dem Schaltungseingang ist ein Gleichspannungswandler (DC/DC-Wandler) gekoppelt, welcher an seinem Ausgang eine Ausgangsspannung mit einem konstanten und unveränderlichen Spannungswert von beispielsweise 48 Volt bereitstellt. Der Ausgang des DC/DC-Wandlers ist über Wickelbänder mit einem Heizelement gekoppelt, mittels welchem das Lenkrad beheizt wird
Zwar erweist sich im Stand der Technik der Einsatz eines Gleichspannungswandlers als vorteilhaft, weil die Heizvorrichtung über einen ausreichend flexiblen Bandleiter mit einem solchen Querschnitt versorgt wird, wie er für die Versorgung der übrigen Verbraucher im Lenkrad üblich ist. Mit anderen Worten kann durch die Erhöhung der Spannung bei einer vorgegebenen Heizleistung die Stromstärke deutlich reduziert werden, und es ist möglich, die Wickelbänder mit solchen geringen Querschnitten einzusetzen, dass sie ausreichend flexibel sind.
Ein gattungsgemäße Lenkradheivorrichtung ist ferner aus der DE 298 02 579 U1 bekannt.

Ferner ist aus der DE 10 2008 049 277 A1 ist ein elektrisches Heizsystem für Kraftfahrzeuge bekannt, bei dem die Heizleistung eines PTC-Heizelements mittels der Ausgangsspannung eines DC/DC-Wandlers geregelt wird.

Es ist Aufgabe der Erfindung, eine gegenüber dem Stand der Technik verbesserte Lenkradheizvorrichtung für ein Kraftfahrzeug sowie ein entsprechendes Verfahren zu schaffen.

Diese Aufgabe wird erfindungsgemäß durch eine Heizvorrichtung, durch ein Kraftfahrzeug, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Lenkradheizvorrichtung ist zum Beheizen eines Lenkrads eines Kraftfahrzeugs ausgebildet. Sie umfasst einen elektrischen Schaltungseingang, welcher an eine elektrische Spannungsquelle des Kraftfahrzeugs angeschlossen werden kann. Die Heizvorrichtung umfasst außerdem einen elektrischen Schaltungsausgang, welcher zum Anschließen eines Heizelements zum Beheizen des Lenkrads dient. Die Heizvorrichtung hat auch einen zwischen den Schaltungseingang und den Schaltungsausgang geschalteten Gleichspannungswandler, welcher aus einer Bordnetzspannung der Spannungsquelle eine Ausgangsspannung mit einem gegenüber der Bordnetzspannung verschiedenen Spannungswert am Schaltungsausgang bereitstellen kann. Eine elektronische Steuereinheit stellt die Temperatur des Lenkrads auf einen vorgebbaren Sollwert ein. Der Gleichspannungswandler weist einen Steueranschluss auf, welcher mit einem Steuerausgang der Steuereinheit gekoppelt ist, wobei die Steuereinheit die Temperatur des Lenkrads durch Steuerung des Spannungswerts der von dem Gleichspannungswandler bereitgestellten Ausgangsspannung und somit durch Ansteuerung des Gleichspannungswandlers einstellen kann.

Während im Stand der Technik der Gleichspannungswandler eine Ausgangsspannung mit einem konstanten und unveränderlichen Spannungswert von beispielsweise 48 Volt bereitstellt und die Einstellung der Temperatur mittels der Pulsweitenmodulation erfolgt, wird bei der lösungsgemäßen Heizvorrichtung ein steuerbarer - insbesondere ein geregelter - Gleichspannungswandler eingesetzt, so dass die Steuereinheit die gewünschte Temperatur zumindest durch Steuerung der Ausgangsspannung des Gleichspannungswandlers einstellen kann. Die Heizvorrichtung hat den Vorteil, dass bei gleichen konstruktiven Voraussetzungen - insbesondere bei gleichen Leitungsquerschnitten - insgesamt mehr Leistung an das Lenkrad bzw. das Heizelement abgegeben werden kann. Andererseits können auch unter Beibehaltung der geforderten Leistung die Leitungsquerschnitte der Wickelbänder reduziert werden. Ein weiterer Vorteil ist darin zu sehen, dass insbesondere bei geringeren Leistungen bzw. geringeren Sollwerten der Temperatur keine zu hohen Frequenzen bei der Pulsweitenmodulation erzeugt werden müssen, sondern beispielsweise einfach die Höhe der Ausgangsspannung entsprechend reduziert werden kann. Dies führt wiederum dazu, dass Probleme hinsichtlich der elektromagnetischen Verträglichkeit vermieden werden können und sich beispielsweise auch der Einsatz von zusätzlichen Abschirmelementen erübrigt. Insgesamt kann durch Einstellung der Ausgangsspannung des Gleichspannungswandlers die Temperatur des Lenkrads auch über einen relativ großen Temperaturbereich variiert werden, und zwar unter Beibehaltung oder sogar Reduzierung der Leitungsquerschnitte.

Vorzugsweise wird das Heizelement - etwa in Form einer Heizmatte oder dergleichen - über Wickelbänder mit elektrischer Energie versorgt. Grundsätzlich kann dabei vorgesehen sein, dass die Wickelbänder zwischen dem Schaltungseingang und dem Gleichspannungswandler angeordnet sind, so dass der Gleichspannungswandler in das bewegliche Lenkrad integriert ist. Es erweist sich jedoch als vorteilhaft, wenn die Wickelbänder zwischen den Gleichspannungswandler und den Schaltungsausgang bzw. das Heizelement geschaltet sind, so dass der Gleichspannungswandler in einem stationären, bezüglich des Fahrgestells unbeweglichen Bauteil angeordnet ist. Der Ausgang des Gleichspannungswandlers ist dann über die Wickelbänder mit dem Heizelement gekoppelt.

Die Heizvorrichtung kann also auch die genannten Wickelbänder umfassen.

Bevorzugt umfasst die Heizvorrichtung auch das Heizelement selbst.

In einer Ausführungsform ist vorgesehen, dass die Heizvorrichtung einen Temperatursensor zum Erfassen der Temperatur des Lenkrads aufweist und die Steuereinrichtung die Temperatur abhängig von einem erfassten Istwert auf den vorgebbaren Sollwert regelt. Diese Regelung kann durch Regelung des Spannungswerts der Ausgangsspannung des Gleichspannungswandlers erfolgen. Somit wird die Temperatur besonders präzise auf den gewünschten Sollwert eingestellt.

Insbesondere ist vorgesehen, dass der Gleichspannungswandler die Ausgangsspannung mit einem gegenüber der Bordnetzspannung höheren Spannungswert am Schaltungsausgang bereitstellen kann. Der maximal mögliche Spannungswert der Ausgangsspannung kann beispielsweise 48 Volt betragen. Somit lässt sich eine relativ große Leistung an das Heizelement abgeben, so dass das Lenkrad auch bei sehr geringen Temperaturen - selbst bei -40° C - sehr schnell auf die gewünschte Temperatur aufgeheizt werden kann. Durch Erhöhung der Spannung kann die Leistung unter Beibehaltung der Stromstärke erhöht werden.

Ergänzend oder alternativ kann vorgesehen sein, dass der Gleichspannungswandler dazu ausgebildet ist, die Ausgangsspannung mit einem gegenüber der Bordnetzspannung geringeren Spannungswert bereitzustellen. Somit können auch geringere Leistungen an das Heizelement abgegeben werden, ohne dass eine schnelle Pulsweitenmodulation verwendet werden muss. Insgesamt kann somit die Temperatur über einen sehr großen Temperaturbereich variiert werden.

Zusätzlich zu der Möglichkeit, die Ausgangsspannung des Gleichspannungswandlers zu steuern, umfasst die Heizvorrichtung Schaltmittel zur Pulsweitenmodulation der Ausgangsspannung, welche mittels der Steuereinheit angesteuert werden. Die Steuereinheit ist auch dazu ausgelegt, die Temperatur durch Steuerung des Tastverhältnisses der Pulsweitenmodulation einzustellen. Die zusätzliche Möglichkeit der Pulsweitenmodulation erweist sich insbesondere bei geringeren Werten der Ausgangsspannung als vorteilhaft, weil somit die an das Heizelement abgegebene Leistung auch bei einem relativ geringen Temperaturwert besonders fein und hochpräzise eingestellt werden kann. Es lässt sich somit auch eine sehr geringe Leistung an das Heizelement abgeben, was zusätzlich noch den möglichen Temperaturbereich erweitert.

Dies kann beispielsweise so aussehen, dass die Steuereinheit die Temperatur des Lenkrads auf den vorgebbaren Sollwert wahlweise durch Steuerung des Spannungswerts der von dem Gleichspannungswandler bereitgestellten Ausgangsspannung oder durch Steuerung des Tastverhältnisses der Pulsweitenmodulation einstellen kann. Die Steuerung der Temperatur kann somit bedarfsgerecht auf zwei verschiedene Steuerarten und somit situationsangepasst jeweils optimal erfolgen.

Zwischen den beiden Steuerarten kann beispielsweise in Abhängigkeit von dem aktuellen Sollwert der Temperatur und/oder von dem aktuellen Spannungswert der Ausgangsspannung des Wandlers umgeschaltet werden. Es kann beispielsweise ein Grenzwert für die Ausgangsspannung vorgegeben sein, bis zu welchem die Temperatur mittels der Pulsweitenmodulation eingestellt wird, so dass oberhalb dieses Grenzwertes die Einstellung der Temperatur durch Steuerung der Ausgangsspannung des Gleichspannungswandlers durchgeführt wird. Entsprechend kann auch ein Grenzwert für die Solltemperatur vorgegeben sein, bis zu welchem die Pulsweitenmodulation verwendet wird und nach dessen Überschreitung der Gleichspannungswandler angesteuert wird. Bei tieferen Solltemperaturen wird somit bevorzugt die Pulsweitenmodulation - gegebenenfalls kombiniert mit der Ansteuerung des Wandlers - verwendet, während bei größeren Temperaturen vorzugsweise der Gleichspannungswandler zur Einstellung der gewünschten Temperatur entsprechend angesteuert wird.

Es ist auch möglich, die Temperatur des Lenkrads gleichzeitig durch Steuerung des Spannungswertes der Ausgangsspannung und durch Steuerung des Tastverhältnisses der Pulsweitenmodulation einzustellen. Eine solche kombinierte Steuerung kann beispielsweise im mittleren Wertebereich der Ausgangsspannung vorgenommen werden.

Die Erfindung betrifft auch ein Kraftfahrzeug mit einer erfindungsgemäßen Heizvorrichtung, welche zum Beheizen eines Lenkrads des Kraftfahrzeugs ausgebildet ist.

Ein erfindungsgemäßes Verfahren dient zum Betreiben einer Heizvorrichtung, mittels welcher ein Lenkrad eines Kraftfahrzeugs beheizt wird, wobei an einem elektrischen Schaltungseingang der Heizvorrichtung eine Bordnetzspannung einer elektrischen Spannungsquelle des Kraftfahrzeugs angelegt wird, das Lenkrad mittels eines mit einem elektrischen Schaltungsausgang der Heizvorrichtung gekoppelten Heizelements beheizt wird, und wobei mittels eines zwischen den Schaltungseingang und den Schaltungsausgang geschalteten Gleichspannungswandlers aus der Bordnetzspannung eine Ausgangsspannung mit einem gegenüber der Bordnetzspannung verschiedenen Spannungswert am Schaltungsausgang bereitgestellt wird und mittels einer elektronischen Steuereinheit eine Temperatur des Lenkrads auf einen vorgegebenen Sollwert eingestellt wird. Die Steuereinheit stellt die Temperatur des Lenkrads unter Steuerung des Spannungswerts der Ausgangsspannung ein.

Die mit Bezug auf die erfindungsgemäße Heizvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung eine Lenkradheizvorrichtung gemäß einer Ausführungsform der Erfindung; und
- Fig. 2 und 3: mögliche zeitliche Verläufe einer Ausgangsspannung am Schaltungsausgang.

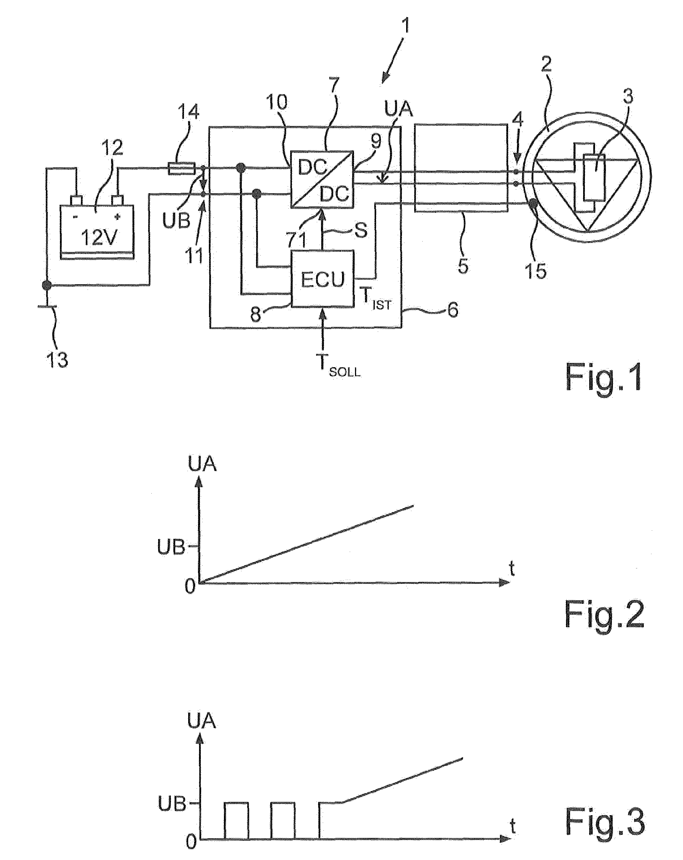

Eine in Fig. 1 dargestellte Heizvorrichtung 1 ist zum Beheizen eines Lenkrads 2 eines Kraftfahrzeugs, insbesondere eines Personenkraftwagens, ausgebildet. In das Lenkrad 2 ist zu diesem Zwecke ein Heizelement 3, beispielsweise in Form einer Heizmatte, integriert. Das Heizelement 3 ist mit einem elektrischen Schaltungsausgang 4 elektrisch gekoppelt. Der Schaltungsausgang 4 hat dabei zwei Anschlüsse, nämlich einen positiven Anschluss sowie einen Anschluss für das Bezugspotential (Masse). Der Schaltungsausgang 4 ist über Wickelbänder 5 mit einem Schaltermodul 6 gekoppelt, welches beispielsweise in einem stationären Bauteil des Fahrzeugs angeordnet ist. Zum Schaltermodul 6 gehört ein Gleichspannungswandler 7 sowie eine elektronische Steuereinheit 8, nämlich beispielsweise ein Mikrocontroller. Der Gleichspannungswandler 7 hat einen Ausgang 9, welcher über die Wickelbänder 5 mit dem Schaltungsausgang 4 gekoppelt ist. Am Ausgang 9 stellt der Gleichspannungswandler 7 eine Ausgangsspannung UA bereit. Ein Eingang 10 des Gleichspannungswandlers 7 ist wiederum mit einem Schaltungseingang 11 der Heizvorrichtung 1 gekoppelt. Der Schaltungseingang 11 ist mit einer Fahrzeugbatterie 12 gekoppelt, welche eine Bordnetzspannung von 12 Volt erzeugt. Diese Bordnetzspannung wird abgegriffen und am Schaltungseingang 11 bereitgestellt. Die Bordnetzspannung ist in Fig. 1 mit UB bezeichnet.

Der Schaltungseingang 11 hat ebenfalls zwei Anschlüsse, nämlich einen ersten Anschluss, der mit dem positiven Anschluss der Fahrzeugbatterie 12 verbunden ist, wie auch einen zweiten Anschluss, der mit einem Bezugspotential 13 und somit mit dem negativen Anschluss der Fahrzeugbatterie 12 verbunden ist. Zwischen dem Schaltungseingang 11 und der Fahrzeugbatterie 12 kann auch zumindest eine Sicherung 14 vorgesehen sein.

In das Lenkrad 2 ist außerdem ein Temperatursensor 15 integriert, welcher die aktuelle Temperatur des Lenkrads 2 misst. Der Temperatursensor 15 ist mit der Steuereinheit 8 gekoppelt, so dass die Steuereinheit 8 die Messwerte des Temperatursensors 15 empfängt und somit stets die aktuelle Temperatur des Lenkrads 2 kennt. In der Steuereinheit 8 liegt somit der aktuelle Istwert T_{IST} der Temperatur des Lenkrads 2 vor.

Also stellt der Gleichspannungswandler 7 die Ausgangsspannung UA bereit. Dabei wird die Bordnetzspannung UB von 12 Volt in die Ausgangsspannung UA umgewandelt. Insbesondere ist dabei vorgesehen, dass der Gleichspannungswandler 7 die Ausgangsspannung UA mit einem Spannungswert bereitstellen kann, welcher von beispielsweise 3 Volt oder 4 Volt oder 5 Volt oder 6 Volt oder 7 Volt oder 8 Volt oder 9 Volt oder 10 Volt oder 11 Volt oder 12 Volt bis beispielsweise 48 Volt variiert werden kann. Der Wert der Ausgangsspannung UA kann dabei entsprechend dem Leistungsbedarf der Heizvorrichtung 1 kontinuierlich variert werden.

Die Steuereinheit 8 empfängt auch eine Information über einen Sollwert T_{SOLL} der Temperatur. Diese Solltemperatur kann beispielsweise mithilfe einer Bedieneinrichtung durch den Fahrer selbst oder in einer anderen Ausführungsform automatisch eingestellt werden. Die Steuereinrichtung 8 regelt dann die Temperatur des Lenkrads 2 auf den Sollwert T_{SOLL}, nämlich unter Ausgabe entsprechender Steuersignale S an einen Steueranschluss 71 des geregelten Spannungswandlers 7. Die Regelung der Temperatur erfolgt somit durch Ansteuerung des Gleichspannungswandlers 7 und somit durch Steuerung des Spannungswerts der Ausgangsspannung UA.

Ergänzend können auch Schaltmittel vorgesehen sein, welche zur Pulsweitenmodulation der Ausgangsspannung UA ausgebildet sind. Auch diese Schaltmittel können durch die Steuereinheit 8 angesteuert werden. Diese Schaltmittel können zum Beispiel zumindest einen elektrischen Schalter umfassen, welcher mit dem Ausgang 9 des Wandlers 7 gekoppelt ist. Es sind nun abhängig von dem Sollwert T_{SOLL} bzw. abhängig von dem aktuellen Wert der Ausgangsspannung UA unterschiedliche Regelszenarien vorgesehen. Zum einen kann die Temperatur zeitweise ausschließlich durch die Regelung der Höhe der Ausgangsspannung UA geregelt werden. Zum anderen kann die Temperatur zeitweise ausschließlich mittels der Pulsweitenmodulation geregelt werden. Des Weiteren ist auch eine Regelung der Temperatur gleichzeitig durch Regelung des Gleichspannungswandlers 7 sowie mittels der Pulsweitenmodulation möglich.

In den Fig. 2 und 3 sind nun beispielhafte Verläufe der Ausgangsspannung UA über der Zeit t dargestellt. Gemäß Fig. 2 kann die Regelung der Temperatur bzw. der an das Heizelement 3 abgegebenen elektrischen Leistung durch Regelung bzw. entsprechende Einstellung des Spannungswerts der Ausgangsspannung UA erfolgen. Hierbei wird die Höhe der Ausgangsspannung UA mittels des Gleichspannungswandlers 7 über der Zeit t variiert. Auf der anderen Seite ist in Fig. 3 ein Regelszenario dargestellt, bei welchem bis zur Höhe der Bordnetzspannung UB bzw. bis zu einem vorgegebenen Sollwert T_{SOLL} die Regelung der Temperatur mittels der Pulsweitenmodulation erfolgt, während oberhalb von 12 Volt die Regelung der Temperatur durch Ansteuerung des Gleichspannungswandlers 7 durchgeführt wird.

Durch Vorsehen des Gleichspannungswandlers 7 kann die Ausgangsspannung UA an dem Heizelement 3 über- und/oder unterhalb der Bordnetzspannung UB eingestellt werden. Zusammenfassend ist es somit möglich, bei geringerem Strom mehr Leistung an das Heizelement 3 abzugeben. Eine Spannung von beispielsweise 24 Volt und ein Strom von beispielsweise 4 Ampere entspricht dann der gleichen Leistung, wie sie heute mit einer Spannung von 12 Volt und einem Strom von 8 Ampere erzeugt werden kann. Das bedeutet, dass bei einem möglichen Strom von 8 Ampere und einer Spannung 40 Volt die dreifache Leistung abgegeben werden kann, ohne dass die Wickelbänder 5 überlastet sind. Damit wird auch die Aufheizzeit deutlich reduziert. Ein weiterer Vorteil der spannungsgesteuerten Regelung ist des Weiteren in der elektromagnetischen Verträglichkeit zu sehen, weil schnelle Schaltflanken nicht mehr über die Wickelbänder 5 übertragen werden müssen.

## Patentansprüche

1. Heizvorrichtung (1) zum Beheizen eines Lenkrads (2) eines Kraftfahrzeugs, mit einem elektrischen Schaltungseingang (11) zum Anschließen an eine elektrische Spannungsquelle (12) des Kraftfahrzeugs, mit einem elektrischen Schaltungsausgang (4) zum Anschließen eines Heizelements (3) zum Beheizen des Lenkrads (2), mit einem zwischen den Schaltungseingang (11) und den Schaltungsausgang (4) geschalteten Gleichspannungswandler (7), der dazu ausgebildet ist, aus einer Bordnetzspannung (UB) der Spannungsquelle (12) eine Ausgangsspannung (UA) mit einem gegenüber dem Spannungswert der Bordnetzspannung (UB) verschiedenen Spannungswert am Schaltungsausgang (4) bereitzustellen, und mit einer elektronischen Steuereinheit (8) zum Einstellen einer Temperatur (T) des Lenkrads (2) auf einen vorgebbaren Sollwert (T_{SOLL}),**dadurch**
**gekennzeichnet, dass**
der Gleichspannungswandler (7) einen Steueranschluss (71) aufweist, der mit der Steuereinheit (8) gekoppelt ist, und dass die Steuereinheit (8) dazu ausgelegt ist, die Temperatur (T) des Lenkrads (2) durch Steuerung des Spannungswerts der von dem Gleichspannungswandler (7) bereitgestellten Ausgangsspannung (UA) einzustellen, und dass die Heizvorrichtung (1) von der Steuereinheit (8) ansteuerbare Schaltmittel zur Pulsweitenmodulation der Ausgangsspannung (UA) umfasst und die Steuereinheit (8) auch dazu ausgelegt ist, die Temperatur (T) durch Steuerung eines Tastverhältnisses der Pulsweitenmodulation einzustellen.

2. Heizvorrichtung (1) nach Anspruch 1,
**dadurch gekennzeichnet, dass**
die Heizvorrichtung (1) einen Temperatursensor (15) zum Erfassen der Temperatur (T) aufweist und die Steuereinheit (8) dazu ausgelegt ist, die Temperatur (T) des Lenkrads (2) abhängig von einem erfassten Istwert (T_{IST}) der Temperatur (T) auf den vorgebbaren Sollwert (T_{SOLL}) zu regeln.

3. Heizvorrichtung (1) nach Anspruch 1 oder 2,
**dadurch gekennzeichnet, dass**
der Gleichspannungswandler (7) dazu ausgebildet ist, die Ausgangsspannung (UA) mit einem gegenüber dem Spannungswert der Bordnetzspannung (UB) höheren Spannungswert am Schaltungsausgang (4) bereitzustellen.

4. Heizvorrichtung (1) nach einem der vorhergehenden Ansprüche,
**dadurch gekennzeichnet, dass**
der Gleichspannungswandler (7) dazu ausgebildet ist, die Ausgangsspannung (UA) mit einem gegenüber dem Spannungswert der Bordnetzspannung (UB) geringeren Spannungswert am Schaltungsausgang (4) bereitzustellen.

5. Heizvorrichtung (1) nach Anspruch 1,
**dadurch gekennzeichnet, dass**
die Steuereinheit (8) dazu ausgelegt ist, die Temperatur (T) des Lenkrads (2) wahlweise durch Steuerung des Spannungswerts der von dem Gleichspannungswandler (7) bereitgestellten Ausgangsspannung (UA) oder durch Steuerung des Tastverhältnisses der Pulsweitenmodulation einzustellen.

6. Heizvorrichtung (1) nach Anspruch 1 oder 5,
**dadurch gekennzeichnet, dass**
die Steuereinheit (8) dazu ausgelegt ist, zwischen den beiden Steuerarten in Abhängigkeit von dem aktuellen Sollwert (T_{SOLL}) der Temperatur (T) und/oder von dem aktuellen Spannungswert der Ausgangsspannung (UA) umzuschalten.

7. Heizvorrichtung (1) nach einem der Ansprüche 1, 5 oder 6,
**dadurch gekennzeichnet, dass**
die Steuereinheit (8) auch dazu ausgelegt ist, die Temperatur (T) des Lenkrads (2) gleichzeitig durch Steuerung des Spannungswerts der von dem Gleichspannungswandler (7) bereitgestellten Ausgangsspannung (UA) und durch Steuerung des Tastverhältnisses der Pulsweitenmodulation einzustellen.

8. Kraftfahrzeug mit einer Heizvorrichtung (1) nach einem der vorhergehenden Ansprüche.

## Claims

1. Heating apparatus (1) for heating a steering wheel (2) of a motor vehicle, having an electrical circuit input (11) for connection to an electrical voltage source (12) of the motor vehicle, having an electrical circuit output (4) for connection of a heating element (3) for heating the steering wheel (2), having a DC voltage converter (7) which is connected between the circuit input (11) and the circuit output (4) and is designed to provide at the circuit output (4), from an on-board electrical system voltage (UB) of the voltage source (12), an output voltage (UA) with a voltage value which is different from the voltage value of the on-board electrical system voltage (UB), and having an electronic control unit (8) for setting a temperature (T) of the steering wheel (2) at a prespecifiable setpoint value (T_{SET}), **characterized in that** the DC voltage converter (7) has a control connection (71) which is coupled to the control unit (8), and **in that** the control unit (8) is designed to set the temperature (T) of the steering wheel (2) by controlling the voltage value of the output voltage (UA) which is provided by the DC voltage converter (7), and **in that** the heating apparatus (1) comprises switching means, which can be driven by the control unit (8), for pulse-width modulation of the output voltage (UA), and the control unit (8) is also designed to set the temperature (T) by controlling a duty ratio of the pulse-width modulation.

2. Heating apparatus (1) according to Claim 1,
**characterized in that**
the heating apparatus (1) has a temperature sensor (15) for detecting the temperature (T), and the control unit (8) is designed to adjust the temperature (T) of the steering wheel (2) to the prespecifiable setpoint value (T_{SET}) depending on a detected actual value (T_{ACT}) of the temperature (T).

3. Heating apparatus (1) according to Claim 1 or 2,
**characterized in that**
the DC voltage converter (7) is designed to provide at the circuit output (4) the output voltage (UA) with a voltage value which is higher than the voltage value of the on-board electrical system voltage (UB).

4. Heating apparatus (1) according to one of the preceding claims,
**characterized in that**
the DC voltage converter (7) is designed to provide at the circuit output (4) the output voltage (UA) with a voltage value which is lower than the voltage value of the on-board electrical system voltage (UB).

5. Heating apparatus (1) according to Claim 1,
**characterized in that**
the control unit (8) is designed to set the temperature (T) of the steering wheel (2) selectively by controlling the voltage value of the output voltage (UA) which is provided by the DC voltage converter (7), or by controlling the duty ratio of the pulse-width modulation.

6. Heating apparatus (1) according to Claim 1 or 5,
**characterized in that**
the control unit (8) is designed to switch over between the two types of control depending on the current setpoint value (T_{SET}) of the temperature (T) and/or on the current voltage value of the output voltage (UA).

7. Heating apparatus (1) according to one of Claims 1, 5 and 6,
**characterized in that**
the control unit (8) is designed to set the temperature (T) of the steering wheel (2) simultaneously by controlling the voltage value of the output voltage (UA) which is provided by the DC voltage converter (7) and by controlling the duty ratio of the pulse-width modulation.

8. Motor vehicle having a heating apparatus (1) according to one of the preceding claims.

## Revendications

1. Dispositif de chauffage (1) permettant de chauffer le volant (2) d'un véhicule automobile et présentant
une entrée (11) de circuit électrique pur le raccordement à une source (12) de tension électrique du véhicule automobile,
une sortie (4) de circuit électrique permettant de raccorder un élément chauffant (3) qui chauffe le volant (2),
un convertisseur (7) de tension continue raccordé entre l'entrée du circuit (11) et la sortie du circuit (4) et configuré pour, à partir de la tension (UB) du réseau de bord de la source (12) de tension, délivrer à la sortie (4) du circuit une tension de sortie (UA) dont la valeur de tension est différente de la valeur de tension (UB) du réseau de bord et
une unité électronique de commande (8) qui règle la température (T) du volant (2) à une valeur de consigne (T_{SOLL}) prédéterminée,
**caractérisé en ce que**
le convertisseur (7) de tension continue présente une borne de commande (71) raccordée à l'unité de commande (8),
**en ce que** l'unité de commande (8) est conçue pour régler la température (T) du volant (2) par commande de la valeur de tension de la tension de sortie (UA) délivrée par le convertisseur (7) de tension continue,
**en ce que** le dispositif de chauffage (1) comporte des moyens de commutation commandés par l'unité de commande (8), qui modulent la largeur des impulsions de la tension de sortie (UA) et
**en ce que** l'unité de commande (8) est également conçue pour régler la température (T) par commande du taux d'échantillonnage de la modulation de la largeur des impulsions.

2. Dispositif de chauffage (1) selon la revendication 1, **caractérisé en ce que** le dispositif de chauffage (1) présente un capteur de température (15) qui saisit la température (T) et **en ce que** l'unité de commande (8) est conçue pour réguler à la valeur de consigne (T_{SOLL}) prédéterminée la température (T) du volant (2) en fonction d'une valeur effective (T_{IST}) de la température (T) saisie.

3. Dispositif de chauffage (1) selon les revendications 1 ou 2, **caractérisé en ce que** le convertisseur (7) de tension continue est configuré pour délivrer la tension de sortie (UA) à la sortie (4) du circuit à une valeur supérieure à la valeur de la tension (UB) du réseau de bord.

4. Dispositif de chauffage (1) selon l'une des revendications précédentes, **caractérisé en ce que** le convertisseur (7) de tension continue est configuré pour délivrer la tension de sortie (UA) à la sortie (4) du circuit à une valeur de tension plus basse que la valeur de la tension (UB) du réseau de bord.

5. Dispositif de chauffage (1) selon la revendication 1, **caractérisé en ce que** l'unité de commande (8) est conçue pour régler la température (T) du volant (2) sélectivement par commande de la valeur de tension de la tension de sortie (UA) délivrée par le convertisseur (7) de tension continue ou par commande du taux d'échantillonnage de la modulation de la largeur des impulsions.

6. Dispositif de chauffage (1) selon les revendications 1 ou 5, **caractérisé en ce que** l'unité de commande (8) est conçue pour commuter entre les deux types de commande en fonction de la valeur de consigne (T_{SOLL}) en cours de la température (T) et/ou de la valeur de tension en cours de la tension de sortie (UA).

7. Dispositif de chauffage (1) selon l'une des revendications 1, 5 ou 6, **caractérisé en ce que** l'unité de commande (8) est également conçue pour régler la température (T) du volant (2) simultanément par commande de la valeur de tension de la tension de sortie (UA) délivrée par le convertisseur (7) de tension continue et par commande du taux d'échantillonnage de la modulation de la largeur des impulsions.

8. Véhicule doté d'un dispositif de chauffage (1) selon l'une des revendications précédentes.
